(19) Europäisches Patentamt
European Patent Office
Office européen des brevets

(11) Numéro de publication: 0 309 337 A1

(12) # DEMANDE DE BREVET EUROPEEN

(21) Numéro de dépôt: **88402371.4**

(22) Date de dépôt: **20.09.88**

(51) Int. Cl.⁴: **C 08 K 3/08**
C 08 L 27/12, C 08 J 5/22

(30) Priorité: **25.09.87 FR 8713295**

(43) Date de publication de la demande:
**29.03.89 Bulletin 89/13**

(84) Etats contractants désignés:
**AT BE CH DE ES FR GB GR IT LI LU NL SE**

(71) Demandeur: **ATOCHEM**
**4 & 8, Cours Michelet La Défense 10**
**F-92800 Puteaux (FR)**

(72) Inventeur: **Platzer, Olivier**
**76 Avenue de Paris**
**F-92320 Chatillon (FR)**

**Amblard, Jean**
**2 Allée Georges Rouault**
**F-75020 Paris (FR)**

**Belloni, Jacqueline**
**14 Boulevard Palaiseau**
**F-91120 Palaiseau (FR)**

**Marignier, Jean-Louis**
**3 Rue des Terre-Neuve**
**F-92190 Meudon (FR)**

(54) **Polymères fluorés échangeurs d'ions contenant des agrégats métalliques dans la masse ou en surface et procédé pour les obtenir.**

(57) L'invention concerne une composition comprenant des agrégats métalliques et au moins un polymère fluoré échangeur d'ions, et plus particulièrement sous la forme de membranes chargées d'agrégats dans la masse et pouvant être revêtues de plusieurs couches de polymère contenant des agrégats. Ces produits sont obtenus par irradiation de membranes ou de polymère fluoré en solution contenant les ions métalliques à réduire.

EP 0 309 337 A1

**Description**

**POLYMERES FLUORES ECHANGEURS D'IONS CONTENANT DES AGREGATS METALLIQUES DANS LA MASSE OU EN SURFACE ET PROCEDE POUR LES OBTENIR**

La présente invention concerne des polymères fluorés échangeurs d'ions contenant des agrégats métalliques ou multimétalliques dans la masse ou en surface et un procédé pour les obtenir. Ce procédé consiste en une réduction radiolytique de sels métalliques.

Ces produits sont utiles comme électrolytes solides ou membranes de séparation de gaz.

Le brevet US 4,629,709 décrit des agrégats de métaux non nobles dans des solutions colloïdales contenant de l'alcool polyvinylique.

On a maintenant trouvé une nouvelle composition comprenant des agrégats métalliques ou multimétalliques et au moins un polymère fluoré échangeur d'ions. Le polymère fluoré échangeur d'ions contient de préférence des groupes acides sulfoniques ou carboxyliques, c'est par exemple un produit de la polymérisation d'un éther vinylique perfluoré contenant des groupes acides sulfoniques ou carboxyliques, ou de la copolymérisation de cet éther avec tout produit copolymérisable, par exemple du styrène ou du divinylbenzène.

Les agrégats métalliques ou multimétalliques sont de petites particules de métal, par exemple de dimensions de l'ordre du nanomètre à une centaine de nanomètres.

Les agrégats de la présente invention ont avantageusement un diamètre moyen inférieur à 50 nm, et de préférence comprise entre 0,6 et 10 nm. Les agrégats de l'invention peuvent être du type monodispersé.

Les agrégats peuvent être constitués d'un ou plusieurs métaux. Ce peut être un ou plusieurs métaux nobles, ou un ou plusieurs métaux nobles et un ou plusieurs métaux non nobles, ou un ou plusieurs métaux non nobles.

Les agrégats peuvent aussi être un mélange d'agrégats d'un métal 1 et d'agrégats d'un métal 2. Ces deux populations d'agrégats pouvant être monodispersées. Le métal 1 et le métal 2 peuvent être chacun un mélange d'un ou plusieurs métaux comme défini ci-dessus. C'est-à-dire qu'on peut avoir des agrégats d'un métal ou d'un alliage et des agrégats d'un autre métal ou d'un autre alliage dans un polymère fluoré échangeur d'ions. On ne sortirait pas du cadre de l'invention avec un mélange d'agrégats d'un métal 1, d'un métal 2 .... d'un métal n ; chacun des métaux 1, 2 ... n étant définis comme ci-dessus.

On entend par métal noble tout métal dont le potentiel redox est positif ; par exemple l'or, l'iridium, le platine, le rhodium, le ruthenium, le palladium, le mercure, l'argent, l'osmium, le cuivre.... Le métal non noble est donc celui qui ne répond pas au critère précédent et c'est exemple le nickel, le cobalt, le fer, le zinc, l'antimoine, l'étain, le bismuth, le plomb, le thallium,...

La composition selon l'invention peut se présenter sous forme d'une solution colloïdale ou sous forme solide telle qu'une membrane. La solution colloïdale se présente sous la forme d'une dispersion des agrégats dans le polymère fluoré échangeur d'ions en présence d'un solvant. Ce solvant peut être tout solvant convenable de ces polymères fluorés, par exemple le diméthylformamide (DMF), ou un mélange eau-alcool. L'alcool utilisé est de préférence un alcool aliphatique ayant de 1 à 5 atomes de carbone.

La membrane peut être par exemple celle qu'on utilise dans des cellules d'électrolyse de NaCl pour la production du chlore dans le procédé dit "à membrane".

L'épaisseur de la membrane peut être quelconque mais est de préférence comprise entre 0,05 et 1 mm.

Les compositions selon l'invention se présentent sous forme d'agrégats métalliques ou multimétalliques localisés dans la masse de la membrane ou à la surface de la membrane ou à la fois dans la masse et à la surface. On peut aussi choisir la charge en métal et la distribution de taille des agrégats à une profondeur déterminée. Ces distributions peuvent aussi être du type monodispersé. Selon une forme particulière de l'invention le diamètre des agrégats diminue quand leur localisation s'étend en profondeur.

Quant aux agrégats dans la masse de la membrane ou dispersés dans la solution colloïdale, leur quantité est habituellement inférieure à 20 % en poids du polymère fluoré échangeur d'ions et de préférence comprise entre 0,001 et 10 % en poids du polymère fluoré échangeur d'ions.

Le ou les métaux des agrégats sur la surface de la membrane peuvent être différents de ceux des agrégats éventuels contenus dans la membrane. Les compositions selon l'invention peuvent aussi comporter différentes couches successives de polymère fluoré échangeur d'ions contenant des agrégats métalliques ou multimétalliques déposées sur la membrane. Ces couches peuvent être sur l'une ou l'autre des deux faces de la membrane, le ou les métaux des agrégats des différentes couches pouvant être différents.

La quantité totale de métal à la surface de la membrane ou contenue dans les différentes couches de polymère fluoré adhérant à la membrane est habituellement inférieure à 20 mg/cm$^2$ de membrane et de préférence comprise entre 0,001 et 10 mg/cm$^2$.

La présente invention concerne aussi un procédé de préparation des compositions précédemment décrites.

Ce procédé est caractérisé en ce qu'on met en contact une solution d'au moins un sel métallique avec le polymère fluoré échangeur d'ions puis qu'on effectue une réduction radiolytique du ou des sels métalliques.

Il suffit de choisir un sel du métal (ou des métaux) dont on veut obtenir des agrégats puis de les mettre en contact avec le polymère fluoré, la réduction radiolytique s'effectue par irradiation à l'aide de rayonnement ionisant, par exemple par irradiation à l'aide des rayons X ou des rayons $\gamma$, ou encore des particules

accélérées.

S'agissant des compositions sous forme colloïdale, on prépare une solution du ou des sels ou métalliques à réduire et de polymère fluoré, par exemple en dissolvant le polymère fluoré dans un mélange eau-alcool et en y ajoutant les ions métalliques à réduire. On utilise avantageusement un alcool aliphatique et de préférence un alcool ayant de 1 à 5 atomes de carbone. L'alcool peut être remplacé par un autre solvant polaire, par exemple le diméthylformamide.

De l'ammoniac en solution peut être ajouté pour faciliter la solubilisation et la stabilisation des sels métalliques, notamment dans le cas des complexes ammoniés tels que $Pt(NH_3)_2Cl_2$ ou $Ni(NH_3)_6SO_4$.

Le rendement radiolytique peut être augmenté par ajout dans la solution d'un capteur de radicaux ($OH^\cdot$, $H^\cdot$ ...). Ce capteur est préférentiellement un formiate du métal lui-même, un formiate de métal alcalin, un formiate d'ammonium, ou un alcool.

La concentration de la solution en ions métalliques à réduire est avantageusement inférieure à $10^{-1}$ et de préférence comprise entre $10^{-4}$ et $5 \times 10^{-3}$ moles par litre. La concentration de cette solution en polymère fluoré échangeurs d'ions est avantageusement inférieure à 30 % en poids et de préférence comprise entre 0,1 et 10 %.

La solution contenant le polymère fluoré et les ions métalliques à réduire est avantageusement désaérée avant irradiation, par exemple par barbotage d'azote, d'argon ou par mise sous vide. Le pH de cette solution est ajusté, entre les valeurs limitant la solubilité des sels métalliques. Dans le cas de métaux non nobles il est de préférence supérieur à 7.

Le rendement de réduction radiolytique est d'autant meilleur que le pH est élevé. Il peut être ajusté selon le cas avec un hydroxyde de métal alcalin ou avec de l'ammoniac dissous.

S'agissant des compositions sous forme de membrane, on procède avantageusement à un nettoyage préalable de la membrane.

Par exemple la membrane est dégraissée avec un solvant convenable (F 113) puis bouillie dans un mélange eau-éthanol dans le but d'en éliminer les impuretés. (F 113 désigne le trichlorotrifluoroéthane). Elle peut être échangée, sous forme $Na^+$ par trempage (environ 16 heures) dans une solution NaOH 20 g/l, ou sous forme $NH_4^+$ par trempage dans une solution d'ammoniac concentrée, pour éliminer son acidité éventuelle.

La membrane est imprégnée d'ions métalliques par immersion dans une solution contenant un ou plusieurs sels du ou des ions métalliques à réduire.

Le solvant de la solution est un solvant ou mélange de solvants convenables permettant la dissolution du ou des sels métalliques ainsi que le gonflement de la membrane. Il est généralement un mélange eau-alcool (de 100:0 à 0:100 % en volume) et permet le contrôle du gonflement de la membrane. L'alcool peut être remplacé par un autre solvant convenable. On utilise avantageusement un alcool aliphatique et de préférence un alcool ayant de 1 à 5 atomes de carbone.

De l'ammoniac dissous peut être ajouté pour faciliter la solubilisation et la stabilisation des sels ou complexes métalliques, notamment dans le cas des complexes ammoniés ($Ni(NH_3)_6SO_4$, $Pt(NH_3)_2Cl_2$).

Avant immersion dans la solution de sels métalliques la membrane peut être trempée dans un solvant pouvant être le même que celui de la solution d'ions métalliques. On ajuste ainsi le gonflement de la membrane. Si la membrane est cationique, en choisissant une solution de cations métalliques on favorise leur migration à l'intérieur et lors de la réduction radiolytique on obtient préférentiellement un dépôt dans la masse et en surface. Si on choisit une solution d'anions, on favorise le dépôt en surface et dans les couches superficielles de la membrane. Plus le gonflement est important, plus la profondeur atteinte est grande. On procède de même, mais en inversant les charges, pour des membranes anioniques.

Plus la température pendant cette immersion est élevée, plus la membrane gonfle et peut favoriser la migration dans la masse des ions métalliques à réduire.

Un fort gonflement de la membrane peut faciliter aussi la production de gros agrégats.

La concentration en ions métalliques de la solution peut prendre toutes les valeurs. Elle est seulement limitée par la limite de solubilité des sels métalliques utilisés dans le solvant utilisé. Elle est préférentiellement comprise entre $5 \times 10^{-4}$ et $5 \times 10^{-1}$ mole/litre.

Le pH de la solution est compris entre les valeurs de pH limitant la solubilité du ou des sels métalliques utilisés. Il peut être ajusté de manière à contrôler l'échange ionique entre la membrane et la solution.

La température d'imprégnation peut varier entre les températures de fusion et d'ébullition du solvant. Elle n'atteint en aucun cas la température de décomposition de la membrane.

La durée d'imprégnation peut varier entre 0 et la durée nécessaire pour obtenir le taux d'imprégnation désiré. Elle est fonction de la composition en solvant et en sel métallique de la solution, de la température d'imprégnation et de la localisation du dépôt d'agrégats métalliques désirée.

Cette durée est généralement comprise entre quelques minutes et 20 heures.

Avant la réduction radiolytique, la solution est de préférence désaérée.

Le rendement radiolytique peut être augmenté par ajout dans la solution d'un capteur de radicaux ($OH^\cdot$, $H^\cdot$,...). Ce capteur est préférentiellement un formiate du métal lui-même, un formiate de métal alcalin, un formiate d'ammonium, ou encore un alcool.

La membrane immergée dans la solution d'ions métalliques, ou la solution d'ions métalliques et de polymère fluoré en vue de préparer la composition de l'invention sous forme colloïdale, sont ensuite soumises à un rayonnement ionisant pour provoquer une réduction radiolytique des ions métalliques.

Le rayonnement ionisant utilisé pour l'irradiation peut être : les rayons $\gamma$, les rayons X ou les particules

accélérées (électrons...). L'irradiation peut être effectuée à toutes températures comprises entre les températures de fusion et d'ébullition du solvant, si cette dernière ne dépasse pas la température de décompositon de la membrane. Elle peut être la température ambiante quels que soient le ou les métaux à réduire. Elle est préférentiellement la température ambiante.

La dose d'irradiation appliquée est fonction de la concentration et de la nature des ions métalliques à réduire, de la nature du solvant, et de la charge en métal désirée.

La taille et/ou le nombre des agrégats augmente avec la dose de rayonnement ionisant.

S'agissant des membranes, à partir du début jusqu'à la fin de l'irradiation, le pH de la solution peut être mesuré et ajusté de manière à contrôler la pénétration des ions métalliques à l'intérieur de la membrane.

On peut aussi prendre une membrane qui a été imprégnée d'ions métalliques par immersion dans une solution et la mettre dans une autre solution ne contenant que du solvant et pas d'ions métalliques et soumettre l'ensemble à un rayonnement ionisant comme précédemment.

Avantageusement le solvant est un mélange eau-alcool, le pH peut être ajusté de manière à provoquer une précipitation localisée des ions métalliques dans la membrane (sous forme d'hydroxyde par exemple), et empêcher ainsi leur déplacement ultérieur dans la membrane. Cette précipitation peut être également obtenue par l'ajout d'un contre-ion convenable ($Cl^-$...).

Cette variante permet d'obtenir des agrégats uniformément répartis dans toute la masse de la membrane. Le diamètre des agrégats est alors contrôlé par le gonflement et la dose d'irradiation.

Après réduction radiolytique, la membrane est rincée à l'eau distillée et séchée. Elle est préférentiellement séchée sous atmosphère inerte, ou sous vide primaire dans un dessicateur.

On peut aussi préparer une composition selon l'invention et se présentant sous forme colloïdale en dissolvant une ou plusieurs compo sitions selon l'invention se présentant sous forme solide, par exemple une membrane contenant des agrégats métalliques ou multimétalliques.

Avantageusement on se place sous atmosphère inerte pendant la dissolution.

On peut utiliser tout solvant des polymères fluorés échangeurs d'ions, avantageusement des solvants tels que le diméthylformamide ou des mélanges eau-alcool.

On peut donc obtenir des solutions colloïdales d'agrégats métalliques ou multimétalliques et de polymère fluoré échangeur d'ions de deux façons différentes, par réduction des sels métalliques contenus dans une solution de sels métalliques et de polymères fluorés ou par dissolution d'une composition comprenant un polymère fluoré et des agrégats métalliques.

Les solutions colloïdales obtenues par l'une des deux méthodes décrites peuvent être étalées et séchées sur des membranes échangeuses d'ions.

Le séchage de la solution colloïdale peut être effectué à toute température et éventuellement sous pression réduite. La température est limitée par la température de décomposition du polymère.

L'adhérence peut être améliorée par traitement thermique éventuellement sous pression.

Ce dernier procédé peut être renouvelé à plusieurs reprises pour obtenir un empilement de couches de polymère renfermant des agrégats de métaux différents dans chacune des couches. Deux couches contenant chacune le même métal ou un métal différent peuvent également être appliquées sur les faces opposées d'une même membrane. Si la solution colloïdale contient plusieurs métaux ou plusieurs alliages, on peut obtenir des membranes revêtues de toutes les combinaisons de couches possibles, chaque couche contenant toute combinaison de métaux ou alliages.

Ce même procédé s'applique aussi avec des couches contenant des agrégats multimétalliques.

Le procédé décrit dans l'invention permet la génération d'agrégats métalliques ou multimétalliques, à température ambiante, dans la masse ou à la surface des polymères fluorés échangeurs d'ions.

Ces agrégats sont générés par réduction radiolytique de sels métalliques dissous dans un solvant approprié et imprégnés dans le polymère ou adsorbés à sa surface. Ces agrégats sont constitués d'un métal ou d'un mélange de métaux à l'exclusion de toutes impuretés comme le bore ou le phosphore présentes dans les agrégats métalliques générés par des procédés chimiques mettant en oeuvre des composés réducteurs comme les borohydrures ou les hypophosphites.

Le procédé de l'invention permet la génération d'agrégats métalliques dans la masse d'une membrane échangeuse d'ions : la localisation (à partir de la surface jusqu'au centre de la membrane), la quantité de métal incorporé et la distribution de taille des agrégats sont contrôlées par les différents paramètres du procédé.

Ce procédé permet également de générer un dépôt adhérent d'agrégats métalliques à la surface d'une membrane échangeuse d'ions. Ce dépôt de surface est conducteur de l'électricité lorsque la charge est suffisante.

Ce procédé permet également de réaliser simultanément l'incorporation dans la masse de la membrane et le dépôt en surface d'agrégats métalliques.

Une variante du procédé peut conduire à d'intéressantes applications : le polymère fluoré incorporant les agrégats métalliques peut être dissous dans un solvant convenable (DMF...) pour obtenir une solution colloïdale du métal ou de l'alliage métallique.

Cette solution colloïdale peut être également obtenue par irradiation d'une solution mixte du polymère fluoré et du sel métallique dans un solvant convenable.

Dans ces deux cas, le polymère en solution joue le rôle de surfactant.

Les exemples suivants illustrent l'invention.

EXEMPLE 1

Une membrane de NAFION 117 (marque déposée de DU PONT DE NEMOURS et désignant un polymère fluoré de motif

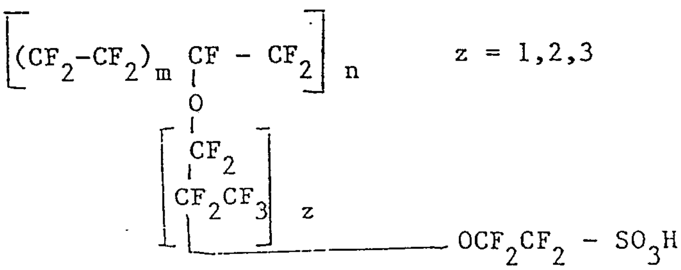

z = 1,2,3

(poids équivalent = 1100 g/mole de $SO_3H$, épaisseur = 180 µm) est dégraissée au F 113 puis bouillie dans un mélange eau-éthanol (70:30 % en volume) jusqu'à disparition de la coloration brune.

Elle est ensuite immergée 70 heures à 20° C dans une solution A contenant le complexe $Pt(NH_3)_2Cl_2$ à $10^{-2}$ mole/litre avec pour solvant un mélange eau-éthanol (70:30 % en volume) à 14 % d'ammoniac dissous.

La membrane est alors irradiée par les rayons γ du cobalt 60, pendant 20 heures, dans la solution A préalablement désaérée par barbotage à l'azote. Le débit de dose et la dose d'irradiation sont respectivement 0,3 Mrad/heure et 6 Mrad.

La membrane est alors rincée à l'eau distillée et séchée sous courant d'azote. Elle présente la couleur brune caractéristique des nanoagrégats de platine.

La charge totale moyenne de platine dans la membrane est de 0,3 % en poids.

Les micrographies obtenues par microscopie électronique à transmission, sur des coupes de la membrane d'environ 50 nm d'épaisseur, montrent d'une part un faible dépôt de surface (20 nm), et d'autre part que le diamètre D des agrégats incorporés varie en fonction de la profondeur P dans la membrane. On a la distribution suivante :

$0 < P < 1$ µm $3 < D < 25$ nm
$1 < P < 3$ µm $1,5 < D < 10$ nm
$3 < P < 5$ µm $0,6 < D < 4$ nm
$P < 5$ µm $0,6 < D < 1,5$ nm

60 % de la charge totale en platine se trouve entre la surface de la membrane et 1 µm de profondeur.

EXEMPLE 2

Une membrane de NAFION 117 (poids équivalent = 1100, épaisseur = 180 µm) est dégraissée au F 113 puis bouillie dans un mélange eau-éthanol (70:30 % en volume) jusqu'à disparition de la coloration brune.

Elle est ensuite immergée 6 heures à 20° C dans une solution contenant le complexe $(Ir(NH_3)_5Cl)Cl_2$ à $10^{-2}$ mole/litre avec pour solvant un mélange eau-éthanol (90:10 % en volume) à 14 % d'ammoniac dissous.

La membrane est alors irradiée, pendant 84 heures, par les rayons γ du cobalt 60 dans un mélange eau-éthanol (99:01 % en volume) désaéré. Le débit de dose et la dose d'irradiation sont respectivement 0,6 Mrad/heure et 50,4 Mrad.

La membrane est alors rincée à l'eau distillée et séchée sous courant d'azote. Elle présente la couleur brune caractéristique des nanoagrégats d'iridium.

Les agrégats d'iridium sont uniformément dispersés dans la membrane. Leur diamètre varie entre 0,6 et 2 nm. 60 % d'entre eux ont un diamètre compris entre 0,8 et 1,5 nm.

La charge moyenne d'iridium est de 1 % de poids.

EXEMPLE 3

Une membrane de NAFION 117 (poids équivalent = 1100, épaisseur = 180 µm) est dégraissée au F 113 puis bouillie dans un mélange eau-éthanol (70:30 % en volume) jusqu'à disparition de la coloration brune.

La membrane est ensuite échangée sous forme $Na^+$ dans une solution de NaOH à 20 g/l pendant 16 h puis rincée à l'eau distillée.

Elle est immergée 15 heures dans une solution contenant les sels $CuSO_4$ à $5 \times 10^{-2}$ mole/litre et $PdCl_2$ à $5 \times 10^{-3}$ mole/litre avec pour solvant un mélange eau-isopropanol (90:10 % en volume).

Elle est ensuite irradiée 29 heures par les rayons γ du cobalt 60, dans un mélange eau-isopropanol (90:10 % en volume) désaéré.

Le débit de dose et la dose d'irradiation sont respectivement 0,6 Mrad/heure et 17,4 Mrad.

La membrane est alors rincée à l'eau distillée et séchée sous courant d'azote. Elle présente une couleur vert-brun.

Les micrographies montrent que les agrégats sont répartis dans toute la masse de la membrane. 60 % d'entre eux ont un diamètre compris entre 4 et 7 nm.

La diffraction électronique effectuée sur des coupes de la membrane d'environ 50 nm d'épaisseur montre que les agrégats ont une structure CFC dont les paramètres de maille sont ceux de solutions solides des deux métaux. Certains diffractogrammes présentent des anneaux supplémentaires correspondant aux composés définis $Cu_3Pd$ et CuPd.

EXEMPLE 4

Une membrane de NAFION 117 (poids équivalent = 1100, épaisseur = 180 µm) est dégraissée au F 113 puis bouillie dans un mélange eau-éthanol (70:30 % en volume) jusqu'à disparition de la coloration brune.

Elle est séchée à l'air puis immergée et irradiée 14 heures par les rayons γ du cobalt 60, dans une solution désaérée à l'azote, contenant $H_2PtCl_6$ à $10^{-2}$ mole/litre avec pour solvant le mélange eau-éthanol (70:30 % en volume). Le pH a été préalablement ajusté à 6,5 avec de la soude.

Le débit de dose et la dose d'irradiation sont respectivement 0,25 Mrad/heure et 3,5 Mrad.

La membrane présente après séchage un reflet métallique. Les micrographies montrent que le dépôt est localisé principalement en surface sur une épaisseur de 0,12 µm. Ce dépôt est constitué d'agrégats dont le diamètre est compris entre 1 et 5 nm. La charge moyenne en surface est de 6,2 mg par $cm^2$ de membrane.

Des agrégats de diamètre compris entre 0,6 et 2 nm sont répartis dans la masse de la membrane avec une teneur de 0,03 % en poids.

EXEMPLE 5

Une membrane de NAFION 117 (poids équivalent = 1100, épaisseur = 180 µm) est dégraissée au F 113 puis bouillie dans un mélange eau-isopropanol (60:40 % en volume) jusqu'à disparition de la coloration brune. Elle est à nouveau rincée à l'eau distillée.

La membrane est alors immergée 20 heures dans une solution aqueuse d'$Ag_2SO_4$ à $10^{-3}$ mole/litre à pH = 6.

Elle est ensuite irradiée 1 heure 15 minutes par les rayons γ du cobalt 60, dans un mélange eau-isopropanol (80:20 % en volume) à pH = 6,8.

Le débit de dose et la dose d'irradiation sont respectivement 0,54 Mrad/heure et 0,7 Mrad.

La membrane est rincée à l'eau distillée et séchée sous azote. Elle présente la couleur jaune caractéristique des nanoagrégats d'argent.

Les agrégats sont uniformément répartis dans la masse de la membrane avec un taux de 0,04 % en poids. Le diamètre des agrégats varie entre 0,8 et 10 nm. 70 % d'entre eux ont un diamètre comprise entre 4 et 6 nm.

EXEMPLE 6

102 mg (3 $cm^2$) de la membrane métallisée dans l'exemple 5 sont découpés en carrés de 1 $mm^2$ et dissous dans 2 ml de DMF à 60°C. La solution colloïdale d'agrégats d'argent ainsi obtenue est séchée à 110°C sur la face sulfonique d'une membrane de NAFION 902 (20 $cm^2$).

La couche composite NAFION 117-agrégats d'argent ainsi obtenue a une épaisseur d'environ 25 µm, avec une teneur en argent de 0,04 % en poids.

EXEMPLE 7

On prépare une solution contenant 4,3 % en poids de NAFION 117 dissous et $H_2PtCl_6$ à 5 X $10^{-4}$ mole/litre, avec pour solvant un mélange eau-éthanol (99,9:0,1 % en volume). Cette solution est désaérée à l'azote puis irradiée 2 heures par les rayons γ du cobalt 60.

Le débit de dose et la dose d'irradiation sont respectivement 0,25 Mrad/heure et 0,5 Mrad.

On obtient alors une solution colloïdale brune d'agrégats de platine de diamètre compris entre 0,6 et 3 nm. 65 % d'entre eux ont un diamètre compris entre 1 et 2 nm.

On prélève 2,5 ml de cette solution que l'on sèche sur une membrane de NAFION 117 (10 $cm^2$). La couche obtenue a une épaisseur d'environ 50 µm et contient 0,23 % de platine en poids.

EXEMPLE 8

Une membrane de NAFION 117 (poids équivalent = 1100, épaisseur = 180 µm) est dégraissée au F 113 puis bouillie dans un mélange eau-éthanol (70:30 % en volume) jusqu'à disparition de la coloration brune.

Elle est séchée puis immergée 22 heures à 25°C dans une solution I contenant $NiSO_4$ à $10^{-1}$ mole/litre, $HCOONH_4$ à 5 x $10^{-1}$ mole/litre et 1,2 % en poids d'ammoniac dissous, avec pour solvant un mélange eau-éthanol (90:10 % en volume). Le pH de la solution est 9,9.

La membrane est ensuite irradiée 40 heures par les rayons γ du cobalt 60 dans la solution I préalablement désaérée par barbotage à l'azote. Le débit de dose et la dose d'irradiation sont respectivement 0,61 Mrad/heure et 24,4 Mrad.

La membrane est alors rincée à l'eau distillée et séchée sous courant d'azote. Elle présente un reflet métallique.

Les micrographies obtenues par microscopie électronique à transmission sur des coupes de la membranes d'environ 50 nm d'épaisseur, montrent d'une part un dépôt de surface de 0,13 μm d'épaisseur constitué d'agrégats métalliques de 3 à 10 nm de diamètre, et d'autre part la présence d'agrégats de nickel de 3,8 ± 2 nm de diamètre jusqu'à 8 μm de profondeur à partir de la surface de la membrane.

Le dépôt de surface est conducteur de l'électricité. La charge moyenne en surface est de 2,5 mg par $cm^2$ de membrane.

EXEMPLE 9

Une membrane de NAFION 117 (poids équivalent = 1100, épaisseur = 180 μm) est dégraissée au F 113 puis bouillie dans un mélange eau-éthanol (70:30 % en volume) jusqu'à disparition de la coloration brune.

Elle est séchée puis immergée 22 heures à 25° C dans une solution II contenant $NiSO_4$ à $10^{-1}$ mole/litre at HCOONa à $5 \times 10^{-1}$ mole/litre avec pour solvant un mélange eau-éthanol (70:30 % en volume). La valeur du pH de la solution II, initialement de 6,8 diminue à 5,6 à l'issue de l'imprégnation.

La membrane est alors irradiée 40 heures par les rayons γ du cobalt 60 dans la solution II préalablement désaérée par barbotage à l'azote. Le débit de dose et la dose d'irradiation sont respectivement 0,61 Mrad/heure et 24,4 Mrad.

Elle est rincée à l'eau distillée puis séchée sous $10^{-2}$ Torr dans un dessicateur.

La membrane présente une couleur brune très intense carctéristique des nanoagrégats de métaux comme le nickel.

Les micrographies obtenues par microscopie électronique à transmission montrent que les agrégats de nickel sont dispersés sur une profondeur de 15 μm dans la masse de la membrane et que 70 % d'entre eux ont un diamètre moyen de 23 ± 5 nm.

La charge moyenne en poids de nickel dans la membrane est de 0,05 %.

EXEMPLE 10

Une membrane de NAFION 117 (poids équivalent = 1100, épaisseur = 180 μm) est dégraissée au F 113 puis bouillie dans un mélange eau-éthanol (70:30 % en volume) jusqu'à disparition de la coloration brune.

Elle est séchée puis immergée 4 heures à 80° C dans une solution $III_{im}$ contenant $NiSO_4$ à $5 \times 10^{-1}$ mole/litre et HCOONa à $10^{-2}$ mole/litre, avec pour solvant un mélange eau-éthanol (80:20 % en volume).

La membrane est alors séchée puis immergée 10 minutes dans une solution $III_{ir}$ contenant HCOONa à 1 mole/litre, avec pour solvant un mélange eau-éthanol (90:10 % en volume). Le pH de la solution $III_{ir}$ a été préalablement ajusté à 11.5 avec une solution concentrée de NaOH.

La membrane est à nouveau séchée et analysée au spectrophotomètre UV-VIS pour contrôler la précipitation de $Ni(OH)_2$ dans la masse du polymère.

Elle est ensuite irradiée 34 heures par les rayons γ du cobalt 60 dans la solution $III_{ir}$ préalablement désaérée à l'azote. Le débit de dose et la dose d'irradiation sont respectivement 0,3 Mrad/heure et 10,2 Mrad. La membrane est alors rincée à l'eau distillée et séchée sous azote.

Elle présente la couleur brune caractéristique de nanoagrégats de métaux comme le nickel.

Les micrographies montrent que les agrégats de nickel sont uniformément dispersés dans la masse de la membrane et qu'ils ont un diamètre moyen de 3 ± 1,5 nm.

La charge en poids de nickel dans la membrane est de 0,01 %.

EXEMPLE 11

Une membrane de NAFION 117 (poids équivalent = 1100, épaisseur = 180 μm) est dégraissée au F 113 puis bouillie dans un mélange eau-éthanol (70:30 % en volume) jusqu'à disparition de la coloration brune.

Elle est séchée puis immergée 5 heures à 50° C dans une solution $IV_{im}$ contenant $NiSO_4$ à $2 \times 10^{-1}$ mole/litre, $CuSO_4$ à $10^{-1}$ mole/litre, et HCOONa à $10^{-2}$ mole/litre, avec pour solvant un mélange eau-éthanol (80:20 % en volume).

La membrane est alors séchée puis immergée 10 minutes dans une solution $IV_{ir}$ contenant HCOONa à 10 mole/litre avec pour solvant un mélange eau-éthanol (60:40 % en volume). Le pH de la solution $IV_{ir}$ a été préalablement ajusté à 12,1 avec une solution concentrée de NaOH.

La membrane est à nouveau séchée et analysée au spectrophotomètre UV-VIS pour contrôler la précipitation de $Ni(OH)_2$ et $Cu(OH)_2$ dans la masse du polymère.

Elle est ensuite irradiée 63 heures par les rayons γ du cobalt 60 dans la solution $IV_{ir}$ préalablement désaérée à l'azote. Le débit de dose et la dose d'irradiation sont respectivement 0,61 Mrad/heure et 38,4 Mrad. La membrane est alors rincée à l'eau distillée et séchée sous azote. Elle présente une couleur rouge foncé.

Les micrographies montrent que les agrégats sont uniformément dispersés dans la masse de la membrane et qu'ils ont un diamètre moyen de 6 ± 2,5 nm.

La diffraction électronique montre que les agrégats ont une structure CFC avec un paramètre de maille égal à 0,357 ± 0,003 nm (3,57 ± 0,03 Å) ce qui correspond à des solutions solides nickel-cuivre de 20 % à 80 % en

atomes de cuivre.

Les charges en poids de nickel et de cuivre métallique sont respectivement 0,043 % et 0,054 %.

EXEMPLE 12

Une membrane de NAFION 117 (poids équivalent = 1100, épaisseur = 180 µm) est dégraissée au F 113 puis bouillie dans un mélange eau-éthanol (70:30 % en volume) jusqu'à disparition de la coloration brune.

Elle est séchée puis immergée 2 heures à 25° C dans une solution $V_{im}$ contenant $NiSO_4$ à 5 X $10^{-2}$ mole/litre, $CuSO_4$ à $10^{-1}$ mole/litre, et HCOONa à $10^{-2}$ mole/litre, avec pour solvant un mélange eau-éthanol (80:20 % en volume).

La membrane est alors séchée puis immergée 10 minutes dans une solution $V_{ir}$ contenant HCOONa à 5 X $10^{-1}$ mole/litre avec pour solvant un mélange eau-éthanol (85:15 % en volume). Le pH de cette solution a préalablement été ajusté à 11,8 avec une solution concentrée de NaOH.

La membrane est à nouveau séchée et analysée au spectrophotomètre UV-VIS pour contrôler la précipitation de $Ni(OH)_2$ et $Cu(OH)_2$ dans la masse du polymère.

Elle est ensuite irradiée 15 heures par les rayons γ du cobalt 60 dans la solution $V_{ir}$ préalablement désaérée à l'azote. Le débit de dose et la dose d'irradiation sont respectivement 0,3 Mrad/heure et 4,5 Mrad.

La membrane est alors rincée à l'eau distillée et séchée sous azote. Elle présente une couleur brune caractéristique de nanoagrégats de ces deux métaux.

Les micrographies montrent que les agrégats métalliques sont uniformément dispersés dans la membrane et qu'ils ont un diamètre moyen de 3,7 ± 1,7 nm.

Les charges en poids de nickel et de cobalt métallique sont respectivement 0,003 % et 0,002 %.

EXEMPLE 13

On prépare une solution VI contenant 0.84 % en poids de NAFION 117 dissous, $Pb(ClO_4)_2.3H_2O$ à 1,2 X $10^{-3}$ mole/litre et HCOONa à 1,8 X $10^{-2}$ mole/litre, avec pour solvant un mélange eau-éthanol (86:14 % en volume).

La solution VI est désaérée par barbotage à l'azote puis irradiée 17 heures par les rayons γ du cobalt 60. Le débit de dose et la dose d'irradiation sont respectivement 0,33 Mrad/heure et 5,6 Mrad.

On obtient alors une solution subcolloïdale de couleur brun-jaune contenant 2,9 % du poids du polymère en plomb métallique.

Une goutte de cette solution diluée 20 fois est séchée sur une grille et examinée en microscopie électronique à transmission. Les agrégats de plomb observés ont un diamètre de 2 ± 0,5 nm.

On prélève 5 ml de la solution colloïdale non diluée que l'on sèche sur la couche composite NAFION 117/agrégats de Pt de l'exemple 7. La deuxième couche obtenue a une épaisseur d'environ 20 µm et contient 2,9 % en poids de plomb.

EXEMPLE 14

On prépare une solution VII contenant 4,5 % en poids de NAFION 117 dissous et $CuSO_4$ à 4,5 $10^{-4}$ mole $1^{-1}$, avec pour solvant un mélange eau-isopropanol (98:2 % en volume).

On prépare une solution VIII contenant 4,5% en poids de NAFION 117 dissous et $Ag_2SO_4$ à 2,4 $I0^{-4}$ mole $1^{-1}$, avec pour solvant un mélange eau-isopropanol (98:2% en volume).

Les solutions VII et VIII sont désaérées par barbotage à l'azote puis irradiées 54 minutes par les rayons γ du cobalt 60. Les débits de dose et les doses d'irradiation sont respectivement 0,95 Mrad/heure et 0,86 Mrad pour la solution VII, 0,20 Mrad/heure et 0,18 Mrad pour la solution VIII. On obtient deux solutions colloïdales :

- la solution colloïdale de cuivre, de couleur rouge, contient 0,063 % en poids de polymère de cuivre métallique. Les agrégats ont un diamètre moyen de 9,2 nm.
- la solution colloïdale d'argent, de couleur jaune, contient 0,11 % en poids de polymère d'argent métallique. Les agrégats ont une diamètre moyen de 4,5 nm.

On mélange sous azote 0,4 ml de la solution colloïdale d'argent avec 3 ml de la solution colloïdale de cuivre. On obtient une solution colloïdale contenant respectivement en poids de polymère 0,056 % de cuivre métallique et 0,013 % d'argent.

**Revendications**

1. Composition comprenant des agrégats métalliques ou multimétalliques et au moins un polymère fluoré échangeur d'ions.

2. Composition selon la revendication 1, caractérisée en ce que les agrégats ont un diamètre moyen inférieur à 50 nm et sont formés d'un ou plusieurs métaux choisis parmi les métaux nobles et les métaux non nobles.

3. Composition selon la revendication 1 ou 2, caracterisée en ce que les agrégats sont un mélange d'agrégats d'un métal 1 et d'agrégats d'un métal 2 ; le métal 1 et le métal 2 pouvant être chacun un mélange d'un ou plusieurs métaux choisis parmi les métaux nobles et les métaux non nobles.

4. Composition selon l'une des revendications 1 à 3, caractérisée en ce qu'elle est sous forme colloïdale.

5. Composition selon l'une des revendications 1 à 3, caractérisée en ce que le polymère fluoré échangeur d'ions est sous la forme d'une membrane.

6. Composition selon la revendication 5, caractérisée en ce que les agrégats sont répartis dans la masse de la membrane.

7. Composition selon la revendication 6, caractérisée en ce que le diamètre des agrégats varie selon leur localisation en profondeur.

8. Composition selon la revendication 5, caractérisée en ce que les agrégats sont répartis à la surface de la membrane.

9. Composition selon la revendication 5, caractérisée en ce que les agrégats sont répartis à la surface et dans la masse de la membrane.

10. Procédé de préparation de la composition selon l'une des revendications 1 à 5, caractérisé en ce qu'on met en contact une solution d'au moins un sel métallique avec le polymère fluoré échangeur d'ions puis qu'on effectue une réduction radiolytique du ou des sels métalliques.

11. Procédé selon la revendication 10, caractérisé en ce que le solvant de la solution de sels métalliques est un mélange eau-alcool.

12. Procédé de préparation de la composition selon la revendication 4, caractérisé en ce qu'on dissout dans un solvant une ou plusieurs compositions comprenant des agrégats métalliques ou multimétalliques et au moins un polymère fluoré échangeur d'ions.

13. Procédé de préparation de la composition selon la revendication 8 ou 9, caractérisé en ce qu'on dépose sur la membrane une solution colloïdale selon la revendication 4 puis qu'on effectue un séchage suivi éventuellement d'un traitement thermique.

14. Procédé selon la revendication 13, caractérisé en ce que le ou les métaux des agrégats de la solution colloïdale sont différents du ou des métaux des agrégats éventuels contenus dans la membrane.

15. Procédé selon la revendication 13 ou 14, caractérisé en ce qu'on peut déposer une ou plusieurs couches de polymères sur chaque face de la membrane, le ou les métaux des agrégats de chaque chouche pouvant être différents.

Office européen des brevets

# RAPPORT DE RECHERCHE EUROPEENNE

Numero de la demande

EP 88 40 2371

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | JOURNAL OF ELECTROANAL. CHEM. vol. 158, no. 1, 1983, pages 181-185, Elsevier Sequoia S.A.; "H-Y. LIU et al.: "Redox mediation of dioxygen reduction within nafion electrode coatings containing colloidal platinum as catalyst" * Expérimental * | 1,2 | C 08 K 3/08<br>C 08 L 27/12<br>C 08 J 5/22 |
| D,A | EP-A-0 165 177 (CENTRE NATIONAL DE LA RECHERCHE SCIENTIFIQUE) | | |
| A | JOURNAL OF PHYS. CHEM., vol. 90, 1986, pages 6353-6358, American Chemical Society; M.G. ALONSO-AMIGO et al.: "Detection of isolated and paired Cu2+ions in nafion membranes by ESR spectroscopy" | | |

DOMAINES TECHNIQUES RECHERCHES (Int. Cl.4)

C 08 K
C 08 L
C 08 J

Le présent rapport a été établi pour toutes les revendications

| Lieu de la recherche | Date d'achèvement de la recherche | Examinateur |
|---|---|---|
| LA HAYE | 16-12-1988 | DE LOS ARCOS Y VELAZQUEZ |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)